## Europäisches Patentamt
## European Patent Office
## Office européen des brevets

(19)

(11) Numéro de publication: **0 098 906**

**B1**

(12) **FASCICULE DE BREVET EUROPEEN**

(45) Date de publication du fascicule du brevet: **20.11.86**

(51) Int. Cl.⁴: **F 16 D 65/22**

(21) Numéro de dépôt: **82401320.5**

(22) Date de dépôt: **13.07.82**

(54) Perfectionnements aux dispositifs d'actionnement des freins de véhicules.

(43) Date de publication de la demande:
**25.01.84 Bulletin 84/04**

(45) Mention de la délivrance du brevet:
**20.11.86 Bulletin 86/47**

(84) Etats contractants désignés:
**BE DE GB IT NL**

(58) Documents cités:
**FR-A-1 298 556**
**FR-A-1 528 252**
**FR-A-2 389 042**
**FR-B-2 224 676**
**FR-B-2 277 274**
**FR-B-2 296 128**
**US-A-2 923 579**
**US-A-3 313 579**

(73) Titulaire: **Mamery, Gaby Eugène**
**Loisy-sur-Marne F-51300 Vitry-le-François (FR)**

(72) Inventeur: **Mamery, Gaby Eugène**
**Loisy-sur-Marne F-51300 Vitry-le-François (FR)**

(74) Mandataire: **Gérardin, Robert Jean René**
**Cabinet Robert Gérardin 3A, avenue Georges**
**Clémenceau Boîte Postale 2 719**
**F-51055 Reims Cédex (FR)**

Courier Press, Leamington Spa, England.

EP 0 098 906 B1

## Description

La présente invention concerne les dispositifs d'actionnement de freins à tambour utilisés principalement sur les camions ou les remorques.

Sur les dispositifs connus de ce genre les plus couramment utilisés, la came servant à l'écartement des mâchoires de freins est actionnée par l'intermédiaire d'un arbre, d'un levier et d'une tringlerie. L'arbre de manoeuvre est maintenu parallèlement à l'axe de rotation des roues par l'intermédiaire de deux paliers à douilles solidaires respectivement de l'essieu et du pont. Le graissage des paliers est effectué à la graisse, au montage et lors des opérations d'entretien du système de freinage. Aucun carter de protection n'est disposé entre les paliers; aussi, le tronçon d'arbre situé entre les paliers, ainsi que la face interne de ceux-ci, sont-ils directement en contact avec le milieu ambiant.

Il résulte de cela que des projections d'eau et de sable peuvent pénétrer dans les paliers, entre l'arbre et la douille, se mélanger à la graisse et constituer, un quelque sorte, une pâte abrasive; ce qui a pour effet d'augmenter considérablement le coefficient de frottement entre l'arbre et les douilles et d'entraîner rapidement le grippage des douilles sur l'arbre. Ce grippage des douilles sur l'arbre a pour conséquence d'entraîner la rotation de celles-ci par rapport au palier. Cette rotation s'effectuant sans aucun graissage, un jeu important ne tarde pas à apparaître; d'autant que l'espace ainsi constitué entre les douilles et les paliers se remplit lui-même de sable et d'eau. Le fait que l'arbre n'effectue pas une rotation complète et que celui-ci est sollicité toujours dans la même direction, par la came et le levier, entraîne une localisation de l'usure sur un secteur particulier. Il en résulte un désalignement de l'arbre par rapport à l'axe des paliers et, par conséquent, un décalage parfois important de la came de manoeuvre des mâchoires de freins par rapport au plan de symétrie des tambours. Ce décalage se traduit, à la longue, par l'entretien d'un contact permanent de la garniture de l'une des mâchoires avec le tambour; ce qui entraîne une usure anormalement rapide de celle-ci qui a pour conséquence des défectuosités de freinage et une fréquence beaucoup trop grande de remises en état coûteuses.

Différents dispositifs, visant à faire varier la position des mâchoires de frein par rapport au tambour, afin d'entretenir un jeu convenable entre garnitures de frein et tambour, existent déjà. Le plus répandu consiste en un montage sur excentrique des pivots d'articulation des mâchoires.

Les FR—A—2.224.676, FR—A—2.277.274, FR—A—2.296.128 et FR—A—2.389.042 décrivent respectivement:

— Un dispositif de rattrapage de jeu pour freins à sabots, qui entre en fonction lorsque la came décrit un angle excessif consécutif à un jeu trop important entre garnitures de frein et tambour.

— Une commande mécanique pour freins à tambour, à laquelle est associé un dispositif d'ajustement sensible au pivotement du levier de manoeuvre de l'arbre de commande de la came.

— Une timonerie de frein pour automobiles ou remorques dont le levier de manoeuvre de l'arbre d'entraînement de la came comporte une série d'orifices permettant de faire varier le débattement angulaire de la came pour un même débattement de la tringlerie de commande.

— Un dispositif de freinage à air comprimé à rattrapage de jeu automatique, comportant une butée à friction, dont le débattement est limité par deux appuis, qui déterminent le jeu de desserrage des freins.

De tels dispositifs visent essentiellement à compenser un jeu excessif entre mâchoires et tambour de frein, consécutif à une usure normale des garnitures et non à empêcher ou à compenser un débattement transversal de la came de commande des mâchoires dû au grippage des douilles des paliers sur l'arbre de manoeuvre de la came et au battement de celles-ci dans les paliers.

Les perfectionnements selon l'invention visent à empêcher le grippage des douilles des paliers sur l'arbre de manoeuvre de la came de commande des mâchoires de frein et à éliminer tout risque de pollution de la graisse par l'eau et les particules solides, susceptible de transformer cette graisse en pâte abrasive. Le FR—A—1298556 montre les caractéristiques du préambule de la revendication 1.

Ces perfectionnements se caractérisent principalement en ce que l'une des extrémités de la baque située du côté de la came, est introduite dans un palier solidaire de l'essieu, à la place de la douille d'origine, et que la bague située du côté du levier, possède une collerette torique destinée à se loger dans un boîtier, en deux parties, fixé au point de liaison des roues du même train.

Les perfectionnements, objet de l'invention, permettent d'isoler totalement l'arbre de manoeuvre de la came de commande des mâchoires de frein et ses paliers de l'ambiance extérieure, tout en assurant un graissage efficace et permanent entièrement protégé de la pollution par projection d'eau et de particules solides abrasives telles que le sable, par exemple. Il en résulte un maintien parfait de l'axe de la came dans sa position d'origine, une usure régulière des garnitures de frein et une réponse franche et efficace des freins au moment du freinage.

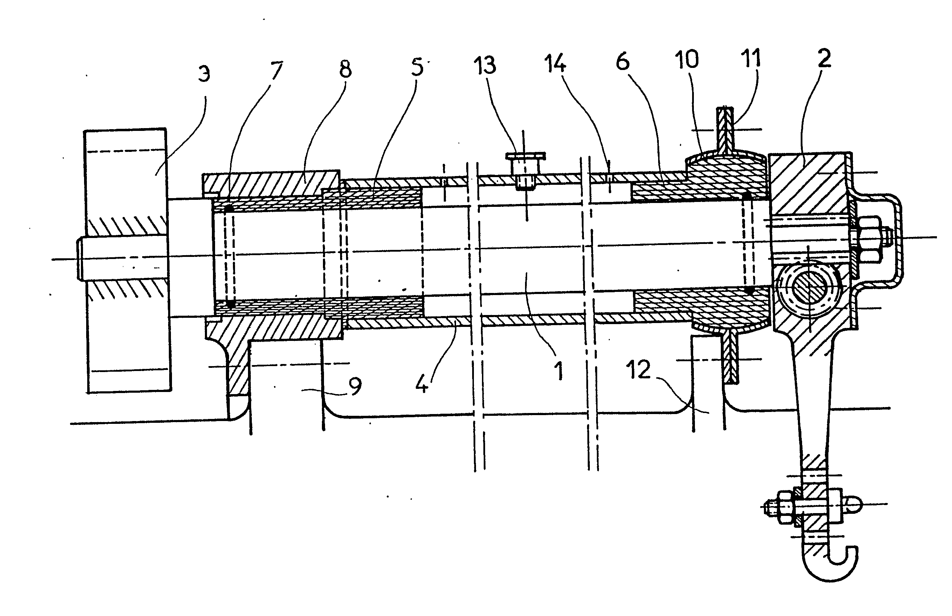

D'autres caractéristiques et avantages apparaîtront dans la description qui va suivre d'un dispositif protecteur réalisé selon l'invention, donné à titre d'exemple de réalisation non limitatif, en référence au dessin annexé représentant une vue en coupe du système de manoeuvre de la came de commande des mâchoires de frein.

En se reportant à ce dessin, on remarque que l'arbre 1, assurant la liaison entre le levier de manoeuvre 2 et la came 3, est monté dans un dispositif protecteur constitué d'un carter de protection tubulaire 4 aux extrémités duquel sont fixées les bagues 5 et 6 situées respectivement du côté de la came 3 et du levier de manoeuvre 2. Ces bagues, munies du garnitures d'étanchéité 7, ont été réalisées de façon que celle 7, située du côté de la came 3, puisse être introduite dans le palier 8, solidaire de l'essieu 9, à la place de la douille d'origine et que celle 6, située du côté du levier 2, possède une collerette torique 10 destinée à se loger dans un boîtier 11 en deux parties et de même forme, fixé au point de liaison 12 des roues du même train. Le carter protecteur 4 est utilisé comme réserve de graisse, celui-ci est équipé d'un graisseur 13 et de clapets de surpression 14.

Comme on le voit, en se reportant à nouveau au dessin, une étanchéité parfaite du dispositif protecteur est obtenue grâce à l'emmanchement à force ou au collage des bagues 5 et 6, aux extrêmités du carter tubulaire 4, et à la présence de garnitures d'étanchéité 7, à l'intérieur des bagues, à proximité immédiate de la face externe de chacune de celles-ci.

L'étanchéité ainsi obtenue, peut être, en conséquence, mise à profit pour utiliser l'espace resté libre entre les deux bagues, à l'intérieur du tube protecteur, pour constituer une réserve de graisse maintenue en légère surpression par rapport à l'extérieur grâce aux clapets de surpression 14 et aux garnitures d'étanchéité 7.

Ainsi, aucune altération de la graiss ne peut se produire du fait de son maintien à l'abri de l'air ambiant, un film de graisse est entretenu dans les bagues grâce à la légère surpression qui règne dans le carter de protection et aucun corps étranger ne peut pénétrer par l'extrêmité des bagues, étant donné la présence des garnitures d'étanchéité.

La fixation du dispositif protecteur, par emmanchement de l'extrêmité libre de l'une des bagues 5 dans le palier 8, après élimination de la douille d'origine, et par emboîtement de la collerette torique de l'autre bague 6 dans le boîtier 11, permet une adaptation aisée et un montage rapide sur des véhicules existants, déjà en service ou en cours de montage.

La fixation, côté du levier de manoeuvre 2, à l'aide d'un système de collerette et de boîtier torique, permet de compenser certains écarts de distance entre le palier 8 et le plan de fixation du boîtier 11, en inclinant ce dernier dans le sens approprié; ce qui favorise l'adaptation.

Le dispositif objet de l'invention peut être utilisé sur la plupart des véhicules équipés de freins à tambour, dont la came de commande des mâchoires est manoeuvrée à distance, par l'intermédiaire d'un arbre, d'un levier et d'une tringlerie.

Des applications particulièrement intéressantes existent sur les camions, les remorques, les matériels agricoles et les engins à roues de toutes sortes, fréquemment utilisés sur piste ou en tous terrains.

## Revendications

1. Perfectionnements aux dispositifs de manoeuvre des freins à tambour de véhicules, dont l'arbre de manoeuvre (1) de la came (3) de commande des mâchoires de frein est monté dans un carter tubulaire de protection (4), servant de réserve de graisse, équipé de bagues (5 et 6) munies de garnitures d'étanchéité (7), d'un graisseur (13) et d'un ou de plusieurs clapets de surpression (14) caractérisé en ce que l'une des extrémités de la bague (5), située du côté de la came (3), est introduite dans un palier (8) solidaire de l'essieu (9), à la place de la douille d'origine, et en ce que la bague (6), située du côté du levier (2), possède une collerette torique (10) destinée à se loger dans un boîtier (11), en deux parties, fixé au point de liaison (12) des roues du même train.

2. Perfectionnements aux dispositifs de manoeuvre des freins à tambour de véhicules selon la revendication 1, caractérisé en ce que le carter tubulaire de protection (4) et les bagues (5 et 6) sont réalisés en une seule pièce.

## Patentansprüche

1. Betätigungsvorrichtung für Fahrzeugbremsen deren Antriebswelle (1) des verrichtungshebearms (3) der Bremsekinnbacken in einem röhrformigen Ölbehälter eingebaut ist (4) für Fettvorrat dienend und mit Ringen (5 und 6) aus-rüsten und die mit Wasserdichebelägen (7) vergesehen sind, mit einer Schmiervorrichtung (13) und mit einer oder mehreren Hochdruckmembranventilen (14) wovon die eine der Enden des Ringes (5) gegen den Hebelarm geliegt (3), ist in einem Lager zusammengehaltenen an die Achse eingeführt (8 und 9), wovon der den Hebel (2) geliegten Ring (6) einen Flansch (10) hat, und in einem Gehäuse su sein bestimmt (II) in beiden Teilen, an der Asche der Zusammenfügung (12) der Räder desselben Radsatzes.

2. Betätigungsvorrichtung für Fahrzeugbremsen gemäss der Patentansprüchen Nr. 1 wovon der röhrformige Schutzsölbehälter (4) und die Ringe (5 und 6) aus einem Bestandteile aus-geführt sind.

## Claims

1. Actuating device for vehicle brakes whom arbor of working (1) of the master-cam (3) of the brake jaws is set up into a protective tubular case (4) using of grease reserve, equipped with rings (5 and 6) provided with gaskets (7), with a oiler (13) and one or several inlet valves (14) wherein one of the ring's ends (5), placed by the of the cam (3), is put in a bearing locked with the axle (9) in the place of the original bush, and wherein the ring (6), placed by the side of the lever (2) has a torus flange (10) destined to get stuck into a case (II) in two parts, fixed on the joining axle (12) of the same wheel set.

2. Actuating device for vehicles brakes following the claim 1, wherein the protective tubular case (4) and the rings (5 and 6) are worked out in only one part.